(19) Europäisches Patentamt / European Patent Office / Office européen des brevets

(11) **EP 2 937 821 A1**

(12) **EUROPEAN PATENT APPLICATION**

(43) Date of publication:
28.10.2015 Bulletin 2015/44

(51) Int Cl.:
**G06K 19/077** (2006.01)  **G09F 3/20** (2006.01)
**G06F 3/147** (2006.01)

(21) Application number: 15162392.3

(22) Date of filing: 02.04.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: 22.04.2014 KR 20140048350
31.07.2014 KR 20140098383
30.09.2014 KR 20140131723

(71) Applicant: **Samsung Electro-Mechanics Co., Ltd. Gyeonggi-do (KR)**

(72) Inventor: **Lim, Jung Hyun Gyeonggi-Do (KR)**

(74) Representative: **Grünecker Patent- und Rechtsanwälte PartG mbB Leopoldstraße 4 80802 München (DE)**

(54) **ELECTRONIC SHELF LABEL HAVING NEAR FIELD COMMUNICATION (NFC) FUNCTION EMBEDDED THEREIN**

(57) An electronic shelf label includes a front protection plate; a rear case coupled to the front protection plate; a display panel disposed on an inner side of the front protection plate including a display unit and a driving unit configured to drive the display unit; a main circuit board disposed on an inner side of the rear case and including a main circuit unit electrically connected to the driving unit; and an near field communications (NFC) unit disposed between the display panel and the main circuit board and configured to perform NFC communications.

FIG. 1

**Description**

**CROSS-REFERENCE TO RELATED APPLICATIONS**

This application claims the benefit of Korean Patent Application Nos. 10-2014-0048350 filed on April 22, 2014, 10-2014-0098383 filed on July 31, 2014 and 10-2014-0131723 filed on September 30, 2014, in the Korean Intellectual Property Office, the entire disclosures of which are incorporated herein by reference for all purposes.

**BACKGROUND**

1. Field

This application relates to an electronic shelf label (ESL) having a near field communications (NFC) function included therein.

2. Description of Related Art

Traditionally, a paper tag scheme to display price information using paper tags having prices and product information, either manually written or computer printed thereon, has been used as a scheme for displaying product information to customers. However, such a paper tag scheme is disadvantageous in that paper tags need to be replaced whenever product pricing information is changed or products are changed.

Research into and development of an electronic tag (hereinafter, referred to as an electronic shelf label (ESL)) capable of making up for the disadvantages of the paper tag scheme as described above have been conducted. Recently, electronic shelf labels have been applied to product display stands, such as a front edge of retail shelving. Such an electronic shelf label system including a plurality of electronic shelf labels may be installed in a store. The electronic shelf labels use liquid-crystal display (LCD) or similar screen technologies to show the current product price to the customer.

Generally, the electronic shelf label system displays and changes product information of products installed on the product display stand electronically.

The electronic shelf label system includes an upper server, a plurality of gateways connected to one upper server in a wired scheme, and a plurality of electronic shelf label groups connected to the plurality of gateways, in a wireless scheme, in groups.

Recently, as a near field communications (NFC) modules have been included in mobile terminals such as smartphones, the necessity of adding the NFC modules to the electronic shelf labels has increased.

However, in an existing electronic shelf label system, when such an NFC module is applied to an electronic shelf label, as the size of existing electronic shelf labels is relatively small, it is not easy to secure a space in which such an NFC module is to be mounted. Therefore, there is a limitation in a location in which such an NFC module can be mounted. In addition, there are many restrictions on a size and a position, of an NFC antenna, which has a large influence on whether or not NFC is recognized at the time of adding an NFC tag.

Therefore, there is a need to enable the NFC function to be applied to the electronic shelf label.

**SUMMARY**

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In accordance with an embodiment, there is provided an electronic shelf label having a near field communications (NFC) function embedded therein.

According to another embodiment an electronic shelf label may include: a front protection plate; a rear case coupled to the front protection plate; a display panel disposed on an inner side of the front protection plate and including a display unit and a driving unit configured to drive the display unit; a main circuit board disposed on an inner side of the rear case and including a main circuit unit electrically connected to the driving unit; and a near field communications (NFC) unit disposed between the display panel and the main circuit board and configured to perform NFC communications.

The main circuit unit is disposed on a rear surface of the main circuit board facing the rear case and is configured to control the driving unit to display product information on the display unit.

The NFC communications unit includes an NFC antenna for NFC communications and an NFC chip electrically connected to the NFC antenna and performing configured to perform NFC communications.

An electronic shelf label including a front protection plate; a rear case coupled to the front protection plate; a display panel disposed on an inner side of the front protection plate and including a display unit and a driving unit configured to drive the display unit; a main circuit board disposed on an inner side of the rear case and including a main circuit unit electrically connected to the driving unit; and a near field communications (NFC) unit formed on a substrate disposed between the display panel and the main circuit board and configured to perform NFC communications.

The main circuit unit is disposed on a rear surface of the main circuit board facing the rear case and is configured to control the driving unit to display product information on the display unit.

The NFC unit includes an NFC antenna formed on a front surface of the substrate facing the display panel and provided for NFC communications; and an NFC chip disposed on the front surface of the substrate, electrically connected to the NFC antenna, and configured to perform NFC communications.

The main circuit board further includes a connector electrically connecting the main circuit unit and the driving unit of the display panel to each other.

The NFC unit includes a first adhering layer adhering the main circuit unit and the substrate to each other; and a second adhering layer adhering the display panel and the substrate to each other.

The NFC unit includes a ferromagnetic substance sheet disposed between the main circuit board and the substrate.

The NFC unit includes a ferromagnetic substance sheet disposed between the main circuit board and the substrate; and a protecting layer disposed between the display panel and the substrate.

In accordance with another example, there is provided an electronic shelf label including a front protection plate; a rear case coupled to the front protection plate; a display panel disposed on an inner side of the front protection plate and including a display unit and a driving unit configured to drive the display unit; a main circuit board disposed on an inner side of the rear case and including a main circuit unit electrically connected to the driving unit; and a near field communications (NFC) unit including an NFC antenna formed on a substrate disposed between the display panel and the main circuit board and an NFC chip disposed on the main circuit board and electrically connected to the NFC antenna configured to perform NFC communications.

The main circuit unit is disposed on a rear surface of the main circuit board facing the rear case and is configured to control the driving unit to display product information on the display unit.

The NFC chip is disposed on one of a rear surface of the main circuit board, a front surface of the main circuit board and the main circuit board.

The main circuit board further includes a connector electrically connecting the main circuit unit and the driving unit of the display panel to each other.

In accordance with another example, there is provided an electronic shelf label including a front protection plate; a rear case coupled to the front protection plate; a display panel disposed on an inner side of the front protection plate and including a display unit and a driving unit configured to drive the display unit; a main circuit board disposed on an inner side of the rear case and including a main circuit unit disposed on a rear surface of the main circuit board facing the rear case and electrically connected to the driving unit; and a near field communications (NFC) unit including an NFC antenna disposed on a front surface of the NFC communications module facing the display panel and an NFC chip disposed on the main circuit board and electrically connected to the NFC antenna configured to perform NFC communications.

The main circuit unit is disposed on a rear surface of the main circuit board facing the rear case and is configured to control the driving unit to display product information on the display unit.

The NFC chip is disposed on one of a rear surface of the main circuit board, a front surface of the main circuit board, and the main circuit board.

The main circuit board further includes a connector electrically connecting the main circuit unit and the driving unit of the display panel to each other.

The display panel is directly disposed on the main circuit board.

The front protection plate includes a transparent screen formed in a portion of the front protection plate.

The display unit is viewable from an outside through the transparent screen.

The main circuit board includes an electrical connector disposed on a front surface of the main circuit board and the display panel includes an electrical connector disposed on one end surface of the display panel and wherein the electrical connector disposed on the front surface of the main circuit board and the electrical connector disposed on the end surface of the display panel are electrically connected.

The main circuit board includes an electrical connector disposed on a rear surface of the main circuit board and the display panel includes an electrical connector disposed on one end surface of the display panel and wherein the electrical connector disposed on the rear surface of the main circuit board and the electrical connector disposed on the end surface of the display panel are electrically connected.

The front protection plate includes a transparent screen formed in a portion of the front protection plate.

The display unit is viewable from an outside through the transparent screen.

The front protection plate includes a transparent screen formed in a portion of the front protection plate.

The display unit is viewable from an outside through the transparent screen.

The front protection plate comprises a transparent screen formed in a portion of the front protection plate.

The display unit is viewable from an outside through the transparent screen.

## BRIEF DESCRIPTION OF DRAWINGS

FIG. 1 is an exploded perspective view illustrating a configuration of an electronic shelf label, according to an embodiment;

FIG. 2 is a view illustrating a first implementation of the electronic shelf label, according to an embodiment;

FIGS. 3A and 3B are views illustrating an example of connection between a display panel and a main circuit board according to an embodiment;

FIGS. 4A and 4B are views illustrating another example of a connection between a display panel and a main circuit board, according to an embodiment;

FIG. 5 is a view illustrating a first implementation of a near field communications (NFC) communications unit, according to an embodiment;

FIG. 6 is a view illustrating a second implementation of the electronic shelf label, according to an embodiment;

FIG. 7 is a view illustrating a second implementation of an NFC communications unit, according to an embodiment;

FIG. 8 is a view illustrating a third implementation of the electronic shelf label, according to an embodiment;

FIGS. 9A and 9B are views illustrating an example of connection between a display panel and a main circuit board, according to an embodiment;

FIGS. 10A and 10B are views illustrating another example of a connection between a display panel and a main circuit board, according to an embodiment;

FIGS. 11 A through 11E are views illustrating a substrate structure of the NFC communications unit, according to an embodiment;

FIG. 12 is a block diagram of the electronic shelf label, according to an embodiment;

FIG. 13 is a view illustrating a configuration of an NFC chip, according to an embodiment;

FIG. 14 is a view illustrating NFC communications theory of the NFC communications unit, according to an embodiment;

FIG. 15 is a view illustrating an operation of the NFC communications unit, according to an embodiment;

FIG. 16 is a view illustrating recognition ranges and recognition distances of NFC modules; and

FIG. 17 is a view illustrating an example of an NFC function in the electronic shelf label, according to an embodiment.

## DETAILED DESCRIPTION

The following detailed description is provided to assist the reader in gaining a comprehensive understanding of the methods, apparatuses, and/or systems described herein. However, various changes, modifications, and equivalents of the systems, apparatuses and/or methods described herein will be apparent to one of ordinary skill in the art. The progression of processing steps and/or operations described is an example; however, the sequence of and/or operations is not limited to that set forth herein and may be changed as is known in the art, with the exception of steps and/or operations necessarily occurring in a certain order. Also, descriptions of functions and constructions that are well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will convey the full scope of the disclosure to one of ordinary skill in the art.

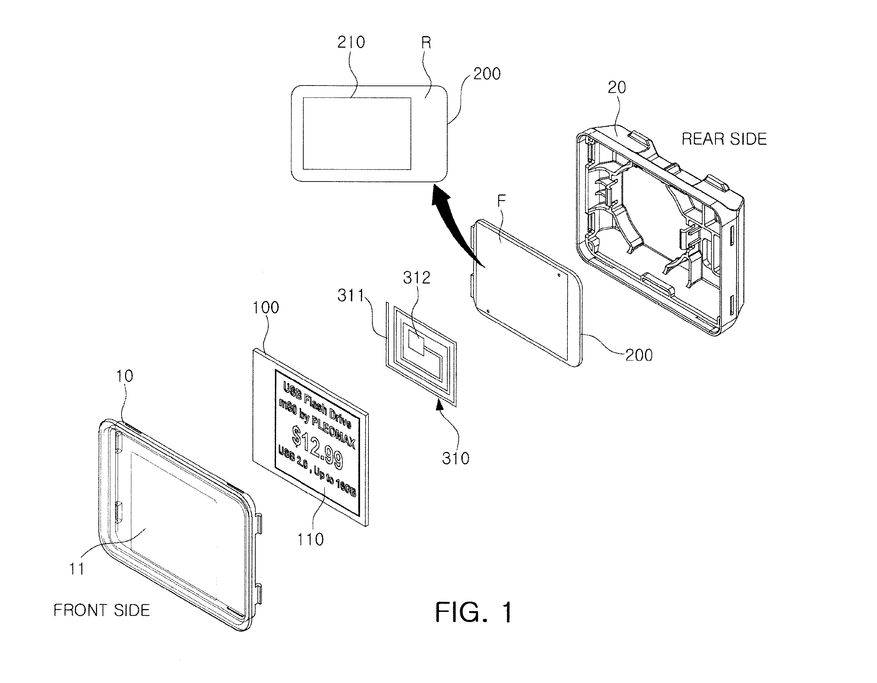

FIG. 1 is an exploded perspective view illustrating a configuration of an electronic shelf label, according to an embodiment.

Referring to FIG. 1, the electronic shelf label, according to an embodiment includes a front protection plate 10, a rear case 20, a display panel 100, a main circuit board 200, and a near field communications (NFC) communications unit 310.

The front protection plate 10 includes a transparent screen 11 formed in at least a portion thereof in order to protect the display panel 100 and transfer a display content of the display panel 100 to the outside. Additionally, in one example, the entire front protection plate 10 is formed of a transparent screen. For example, the transparent screen 11 is formed of a transparent material such as glass or plastic. In one example, a front side refers to a display region side of the electronic shelf label, and a rear side refers to a side opposite to the front side.

In the case in which a separate protecting function is not required, for example, when the display panel 100 is made of sufficient strong material, the front protection plate 10 is not used. Similarly, when the protection plate 10 has an open space with same dimensions as the display panel 100, allowing the display panel 100 to be directly exposed, a separate protecting function is not required.

The rear case 20 includes the front protection plate 10 coupled thereto.

As an example, coupling protrusion parts are formed at edges of the front protection plate 10, coupling grooves or coupling holes are formed at edges of the rear case 20, and the coupling protrusion parts of the front protection plate 10 are inserted into and coupled to the coupling grooves or the coupling holes of the rear case 20.

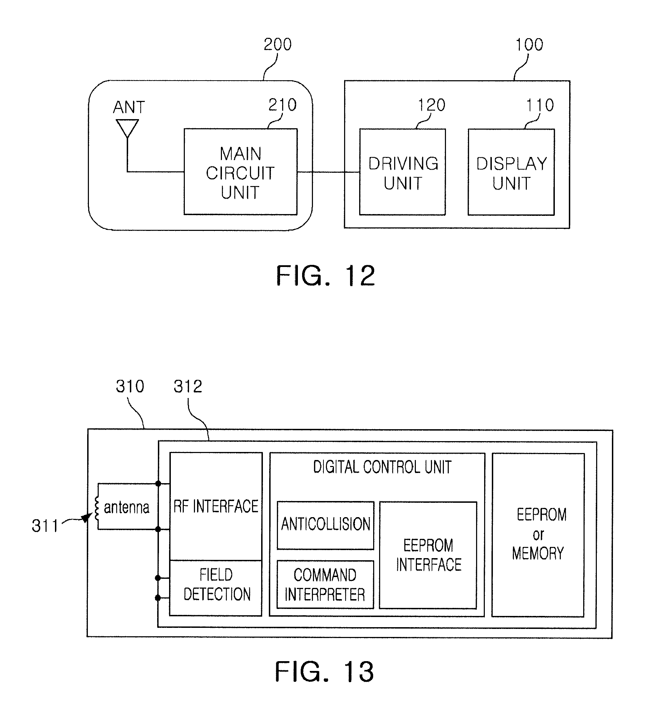

The display panel 100 is disposed on an inner side of the front protection plate 10, and includes a display unit 110 viewable from the outside through the transparent screen 11 and a driving unit 120 (See FIG. 12) driving the display unit 110.

The main circuit board 200 is disposed on an inner side of the rear case 20, and includes a main circuit unit 210 electrically connected to the driving unit 120 (See FIG. 12).

The main circuit unit 210 performs operations for displaying a price electronically, such as a communications function, a display control function, an information storing function, and the like, for all operations of the electronic shelf label.

The main circuit unit 210 is disposed on a rear surface R of the main circuit board 200 facing the rear case 20 and controls the driving unit of the display panel 100 to display product information on the display unit 110 of the display panel 100. Although, FIG. 1 illustrates the main circuit unit 210 as being disposed on the rear surface R of the main circuit board 200, such positioning of the main circuit unit 210 is not limited thereto and thus the main circuit unit 210 may also be disposed on the front surface F of the main circuit board 200.

In addition, the main circuit unit 210 stores a media access control identification (MAC ID) of the electronic shelf label for identifying a device at the time of communicating with a server of an electronic shelf label system.

The NFC communications unit 310 is disposed between a rear surface of the display panel 100 and a front surface F of the main circuit board 200 and performs NFC communications with an external device.

Here, the external device, an apparatus having an NFC function, is a phone such as a smart phone having the NFC function. However, the external device is not limited thereto and can be any type of electronic device having an NFC function such as a tablet computer, a personal media player (PMP), and a smart watch.

Referring briefly to FIG. 13, for example, the NFC communications unit 310 includes an NFC antenna 311 for NFC communications and an NFC chip 312 electrically connected to the NFC antenna 311 and performing NFC communications. The NFC chip 312 includes the same MAC ID as that of the electronic shelf label in which the NFC chip 312 is mounted.

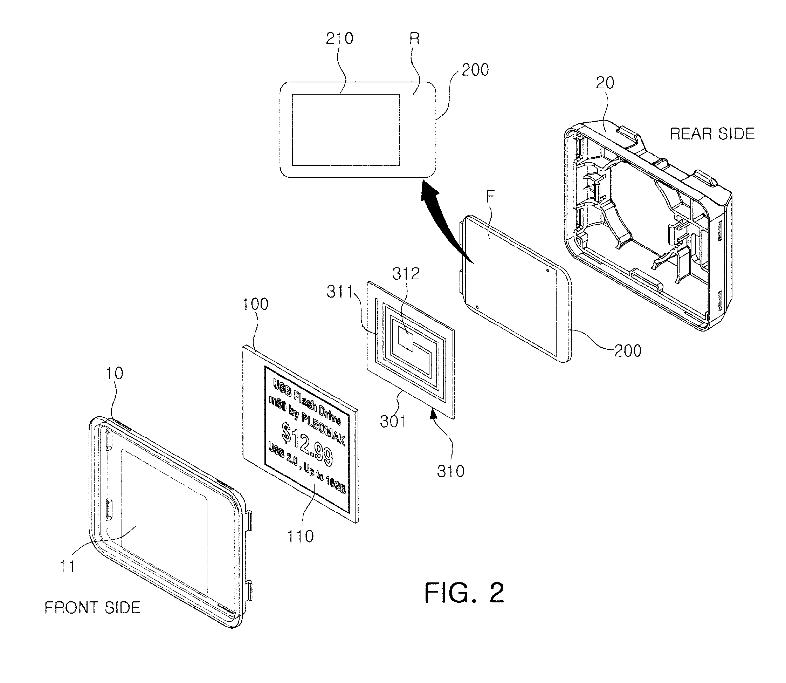

FIG. 2 is a view illustrating a first implementation of the electronic shelf label, according to an embodiment.

Referring to FIG. 2, the electronic shelf label according to an embodiment includes a front protection plate 10, a rear case 20, a display unit 110, a main circuit board 200, and an NFC communications unit 310.

A description for contents that are the same as the contents described with reference to FIG. 1 in a description for the front protection plate 10, the rear case 20, the display panel 100, the main circuit board 200, and the NFC communications unit 310 illustrated in FIG. 2 will be omitted in order to avoid overlapped descriptions.

Referring to FIG. 2, the NFC communications unit 310 is formed on a substrate 301 disposed between the display panel 100 and the main circuit board 200 and performs NFC communications.

As an example, the NFC communications unit 310 includes an NFC antenna 311 and an NFC chip 312. The NFC antenna 311 is formed on a front surface of the substrate 301 facing the display panel 100. The NFC chip 312 is disposed on the front surface of the substrate 301 and is electrically connected to the NFC antenna 311. However, it is noted that the NFC antenna 311 and the NFC chip 312 may also be formed on the rear surface of the substrate 301.

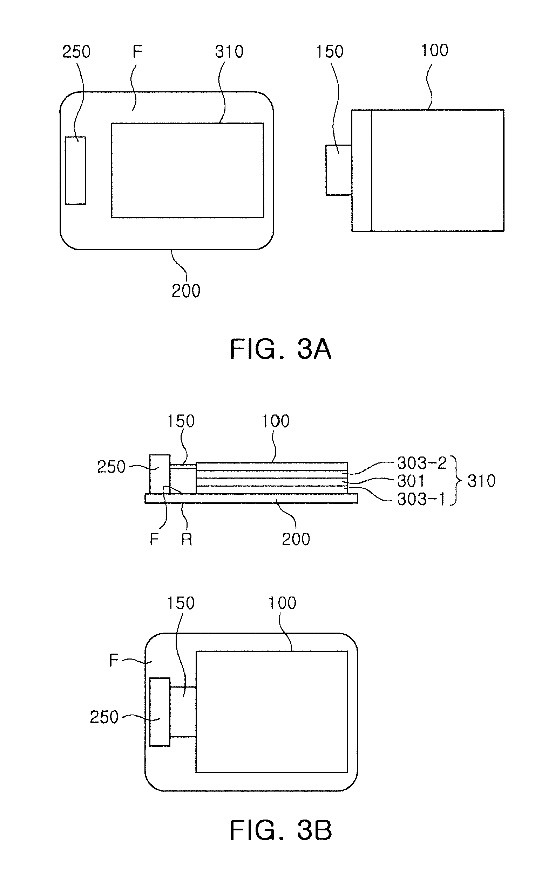

In addition, the display panel 100 and the main circuit board 200 include respective connectors 150 and 250 electrically connecting the main circuit unit 210 and the driving unit of the display panel 100 to each other. This will be described with reference to FIGS. 3A through 4B.

FIGS. 3A and 3B are views illustrating an example of a connection between a display panel and a main circuit board, according to an embodiment.

Referring to FIG. 3A, the connectors 150 and 250 include a first connector 150 and a second connector 250.

The first connector 150 is electrically connected to the driving unit of the display panel 100 and is electrically coupled to the second connector 250.

The second connector 250 is disposed on the front surface F of the main circuit board 200, is electrically connected to the main circuit unit 210, and is electrically coupled to the first connector 150.

Here, the first and second connectors 150 and 250, are electrically coupled to each other, and have any shape as long as they are electrically connected to each other.

As an example, in the case in which the first connector 150 is a female connector and the second connector 250 is a male connector, the second connector 250 is inserted into and coupled to the first connector 150.

FIG. 3B shows a cross-sectional view and a plan view illustrating a state in which the first and second connectors 150 and 250 are electrically coupled to each other.

As an example, the substrate 301 is adhered to the main circuit board 200 through a first adhering layer 303-1 and is adhered to the display panel 100 through a second adhering layer 303-2, but is not limited thereto.

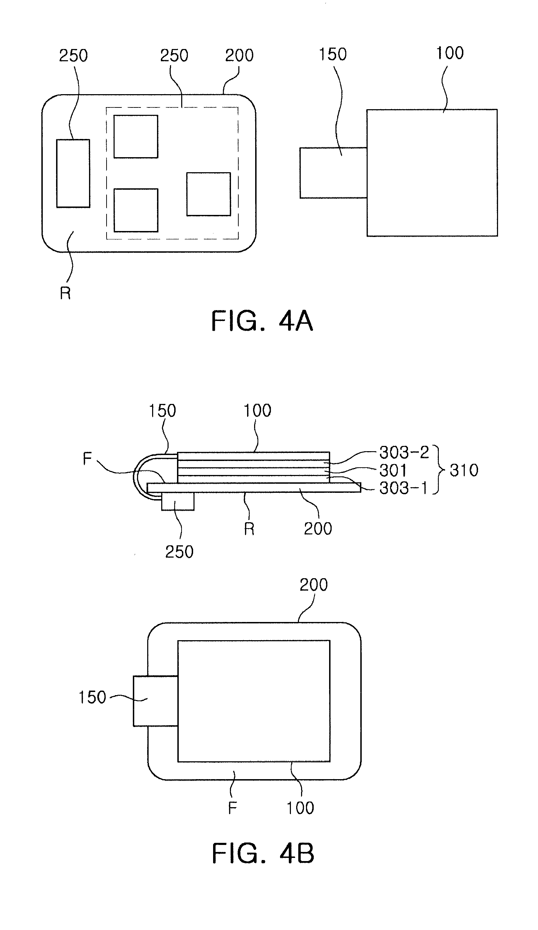

FIGS. 4A and 4B are views illustrating another example of a connection between a display panel and a main circuit board, according to an embodiment.

Referring to FIG. 4A, the connectors 150 and 250 include a first connector 150 and a second connector 250.

A description for contents that are the same as the contents described with reference to FIGS. 3A and 3B in a description for the first and second connectors 150 and 250 illustrated in FIGS. 4A and 4B will be omitted in order to avoid overlapped descriptions.

The first connector 150 is electrically connected to the driving unit of the display panel 100 and is electrically coupled to the second connector 250.

The second connector 250 is disposed on the rear surface R of the main circuit board 200, electrically connected to the main circuit unit 210, and electrically coupled to the first connector 150. In addition, the main circuit unit 210 is disposed on the rear surface R of the main circuit board 200.

Here, the first connector 150 is formed of a flexible printed circuit board and electrically connected to the second connector 250 disposed on the rear surface R of the main circuit board 200.

FIG. 4B shows a cross-sectional view and a plan view illustrating a state in which the first and second connectors 150 and 250 are electrically coupled to each other.

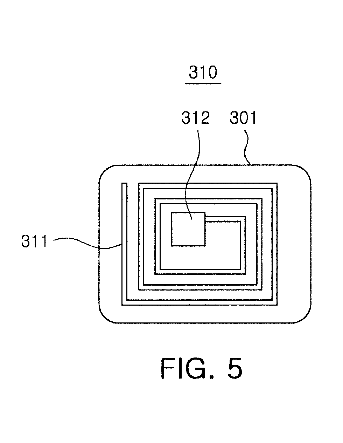

FIG. 5 is a view illustrating a first implementation of an NFC communications unit, according to an embodiment.

Referring to FIG. 5, the NFC communications unit 310 includes an NFC antenna 311 and an NFC chip 312.

In an example, the NFC antenna 311 is formed using an entire area of the front surface of the substrate 301 facing the display panel 100. Therefore, the NFC antenna 311 is formed at a sufficient length using the entire area of the substrate 301, and thus, an NFC recognition range and recognition distance is improved as compared with an NFC antenna disposed in a partial region. Here, the NFC antenna 311 is formed of a conductive pattern. As an example, the conductor pattern is a spiral pattern, but is not limited thereto.

The NFC chip 312 is electrically connected to one end of the pattern of the NFC antenna 311 to perform NFC communications. As an example, in the case in which the NFC antenna 311 is formed of the spiral pattern, the NFC chip 312 is disposed in the vicinity of the center of the substrate 301 and is connected to one end of the pattern of the NFC antenna 311. However, a position of the NFC chip 312 is not particularly limited as long as the NFC antenna 311 and the NFC chip 312 are electrically connected to each other.

Meanwhile, the NFC chip 312 transmits data and power in a contactless type wireless communications scheme as known using the NFC antenna 311 and receives an induced current from an NFC reader to thereby be operated, such that a powerless operation of the NFC chip is possible.

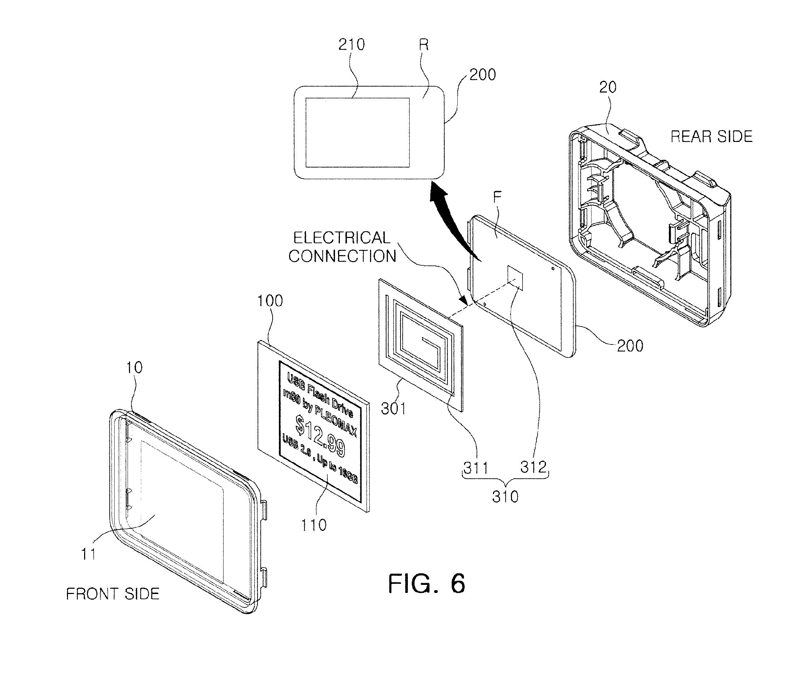

FIG. 6 is a view illustrating a second implementation of the electronic shelf label, according to an embodiment.

Referring to FIG. 6, the electronic shelf label, according to an embodiment includes a front protection plate 10, a rear case 20, a display panel 100, a main circuit board 200, and a near field communications (NFC) communications unit 310.

A description for contents that are the same as the contents described with reference to FIGS. 1 through 5 in a description for the front protection plate 10, the rear case 20, the display panel 100, the main circuit board 200, and the NFC communications unit 310 illustrated in FIG. 6 will be omitted in order to avoid overlapped descriptions.

Referring to FIG. 6, the NFC communications unit 310 includes an NFC antenna 311 formed on the substrate 301 disposed between the display panel 100 and the main circuit board 200 and an NFC chip 312 disposed on the main circuit board 200 and electrically connected to the NFC antenna 311 to perform NFC communications.

The NFC antenna 311 is disposed on the front surface or the rear surface of the substrate 301 facing the display panel 100. In order to improve an NFC recognition range and recognition distance at the front side of the electronic shelf label, the NFC antenna 311 is disposed on the front surface of the substrate 301 facing the display panel 100.

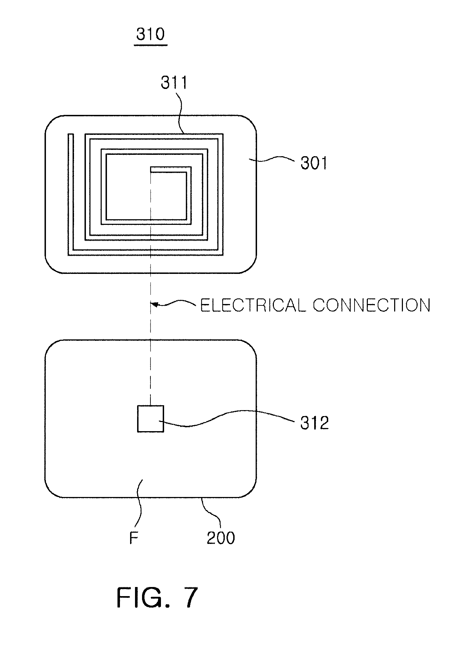

In addition, the NFC chip 312 is disposed on the rear surface or the front surface of the main circuit board 200 or in the main circuit board 200 as long as it is electrically connected to the NFC antenna 311. Here, the NFC chip 312 is embedded in the main circuit board 200 in the case in which the main circuit board 200 is a multilayer board. An example thereof will be described with reference to FIG. 7.

FIG. 7 is a view illustrating a second implementation of an NFC communications unit, according to an embodiment.

Referring to FIG. 7, as an example, in the case in which the NFC chip 312 is disposed on the front surface F of the main circuit board 200 and the NFC antenna 311 is disposed on the front surface of the substrate 301, the NFC antenna 311 disposed on the front surface of the substrate 301 is extended to the rear surface of the substrate 301 through a conductor via hole penetrating through the substrate 301 and is then connected to a pattern connected to the NFC chip 312 disposed on the front surface F of the main circuit board 200.

As described above, an electrical connection scheme between the NFC antenna 311 disposed on the substrate 301 and the NFC chip 312 disposed on the main circuit board 200 is not limited to a specific scheme as long as the NFC antenna 311 disposed on the substrate 301 and the NFC chip 312 disposed on the main circuit board 200 are electrically connected to each other.

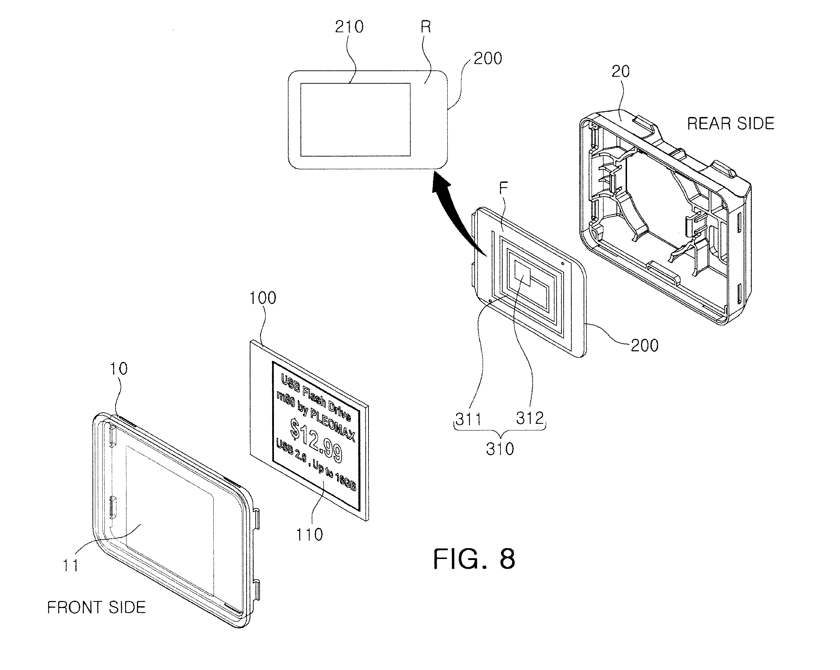

FIG. 8 is a view illustrating a third implementation of the electronic shelf label, according to an embodiment.

Referring to FIG. 8, the electronic shelf label, according to an embodiment includes a front protection plate 10, a rear case 20, a display unit 100, a main circuit board 200, and a near field communications (NFC) communications unit 310.

A description for contents that are the same as the contents described with reference to FIGS. 1 through 7 in a description for the front protection plate 10, the rear case 20, the display panel 100, the main circuit board 200, and the NFC communications unit 310 illustrated in FIG. 8 will be omitted in order to avoid overlapped descriptions.

Referring to FIG. 8, the NFC communications unit 310 includes an NFC antenna 311 and an NFC chip 312 disposed on the main circuit board 200 facing the display panel 100 and electrically connected to each other to perform NFC communications.

The NFC antenna 311 and the NFC chip 312 are disposed on the rear surface or the front surface of the main circuit board 200 or in the main circuit board 200. In order to improve an NFC recognition range and recognition distance at the front side of the electronic shelf label, the NFC antenna 311 is disposed on the front surface of the main circuit board 200 facing the display panel 100.

In addition, the NFC chip 312 is disposed on the rear surface or the front surface of the main circuit board 200 or in the main circuit board 200 as long as it is electrically connected to the NFC antenna 311.

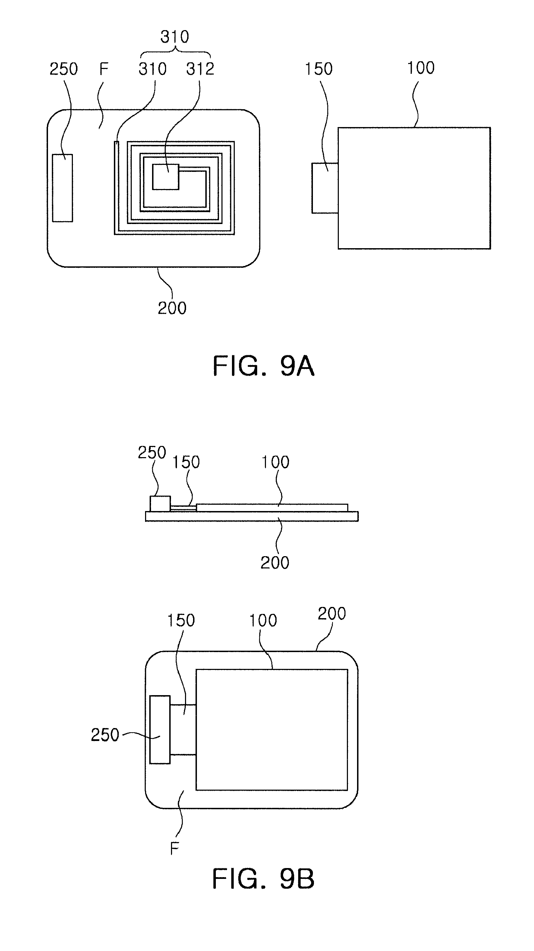

The main circuit board 200 further includes connectors 150 and 250 electrically connecting the main circuit unit 210 and the driving unit of the display panel 100 to each other. This will be described with reference to FIGS. 9A through 10B.

FIGS. 9A and 9B are views illustrating an example of a connection between a display panel and a main circuit board, according to an embodiment.

Referring to FIGS. 9A and 9B, the connectors 150 and 250 include a first connector 150 and a second connector 250.

A description for contents that are the same as the contents described with reference to FIGS. 3A and 3B in a description for the first and second connectors 150 and 250 illustrated in FIGS. 9A and 9B will be omitted in order to avoid overlapped descriptions.

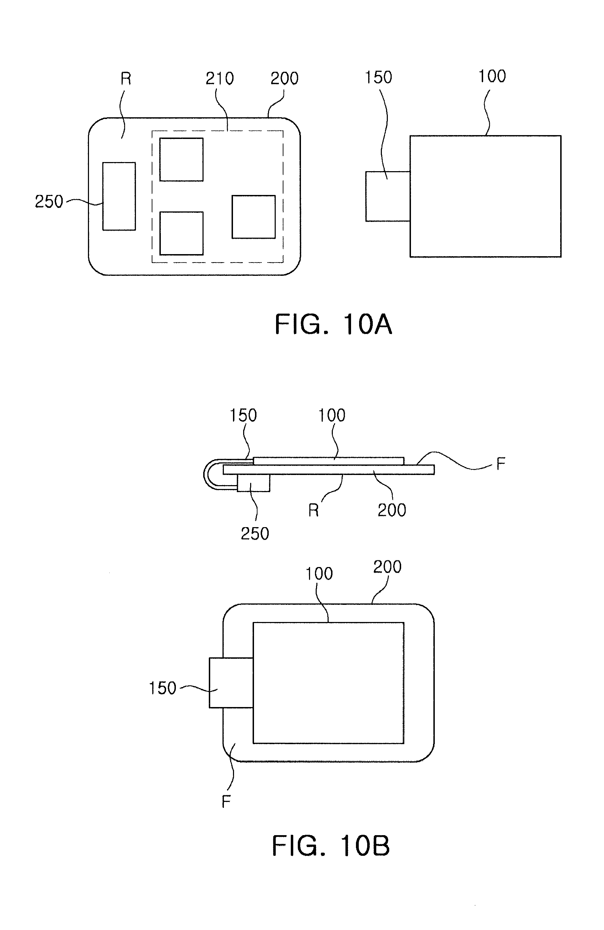

FIGS. 10A and 10B are views illustrating another example of a connection between a display panel and a main circuit board, according to an embodiment.

Referring to FIGS. 10A and 10B, the connectors 150 and 250 include a first connector 150 and a second connector 250.

A description for contents that are the same as the contents described with reference to FIGS. 4A and 4B in a description for the first and second connectors 150 and 250 illustrated in FIGS. 10A and 10B will be omitted in order to avoid overlapped descriptions.

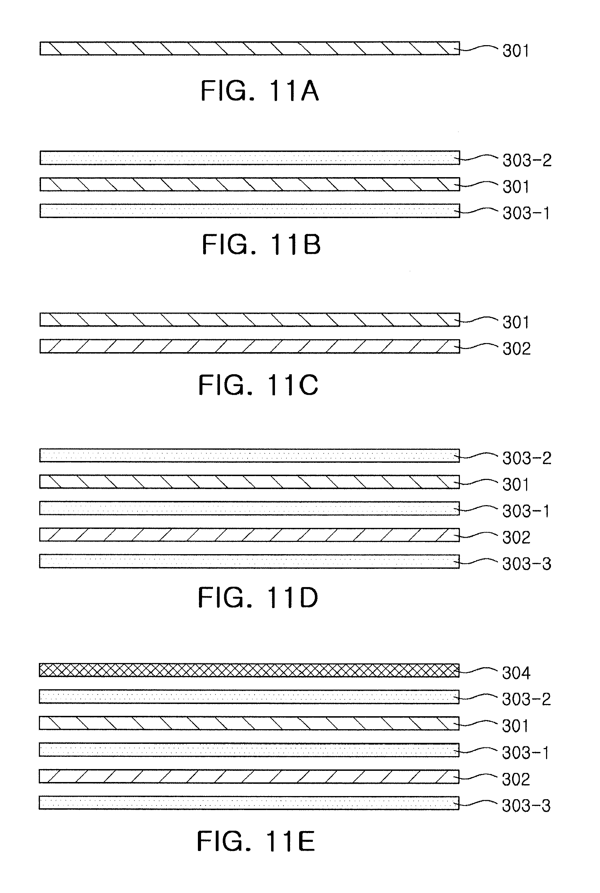

FIGS. 11A through 11E are views illustrating a substrate structure of the NFC communications unit, according to an embodiment.

Referring to FIG. 11A, the NFC communications unit 310 includes the substrate 301 on which the NFC antenna 311 and the NFC chip 312 are disposed.

Referring to FIG. 11B, the NFC communications unit 310 includes the substrate 301, a first adhering layer 303-1 adhering the main circuit unit 210 and the substrate 301 to each other and a second adhering layer 303-2 adhering the display panel 100 and the substrate 301 to each other.

Referring to FIG. 11C, the NFC communications unit 310 includes the substrate 301 and a ferromagnetic substance sheet 302 disposed between the main circuit board 200 and the substrate 301 for raising magnetic field concentration efficiency.

Referring to FIG. 11D, the NFC communications unit 310 includes the substrate 301, a ferromagnetic substance sheet 302, disposed between the main circuit board 200 and the substrate 301 raising magnetic field concentration efficiency, a first adhering layer 303-1 adhering the substrate 301 and the ferromagnetic substance sheet 302 to each other, a second adhering layer 303-2 adhering the display panel 100 and the substrate 301 to each other, and a third adhering layer 303-3 adhering the ferromagnetic substance sheet 302 and the main circuit board 200 to each other.

Referring to FIG. 11E, the NFC communications unit 310 further includes a protecting layer 304 disposed between the second adhering layer 303-2 and the display panel 100 in addition to a stack structure illustrated in FIG. 11D. Here, the protecting layer 304 is formed of a coating such as vinyl, resin, or the like, in order to protect the NFC antenna and the NFC chip on the substrate 301, but is not limited thereto.

A substrate structure of the NFC communications unit 310 as described above is variously implemented and is not particularly limited to the above-mentioned structure.

FIG. 12 is a block diagram of the electronic shelf label, according to an embodiment.

Referring to FIG. 12, the main circuit unit 210 of the main circuit board is electrically connected to the display panel 100.

The main circuit board 210 includes the main circuit unit 210, which includes a wireless communications unit performing wireless communications and a control unit controlling general operations of the electronic shelf label as well as controlling operations of the wireless communications unit and the display panel.

As described above, the display panel 100 includes the driving unit 120 driving a display of information on a screen depending on a control of the main circuit unit 210 and the display unit 110 displaying the information on the screen depending on the driving of the driving unit 120.

FIG. 13 is a view illustrating a configuration of an NFC chip, according to an embodiment.

Referring to FIG. 13, the NFC chip 312 includes a field detection unit and a radio frequency (RF) interface unit that are connected to the antenna 311, a digital control unit, and a memory unit (an electrically erasable programmable read-only memory (EEPROM) or a memory). The control unit further includes an anticollision unit, a command interpreter unit and a memory or EEPROM interface. Although FIG. 13 illustrates the NFC chip 312 as including the RF interface unit, the field detection unit, the digital control unit and the memory or EEPROM interface, it is noted that the field detection unit, the RF interface unit, the digital control unit and the memory or EEPROM interface may be embodied as independent hardware.

The RF interface unit transmits an RF signal through the NFC antenna 311. The field detection unit detects an electromagnetic field through the NFC antenna 311. The digital control unit controls NFC communications while managing the memory unit. In addition, the memory unit (the EEPROM or the memory) stores an identification (ID) therein.

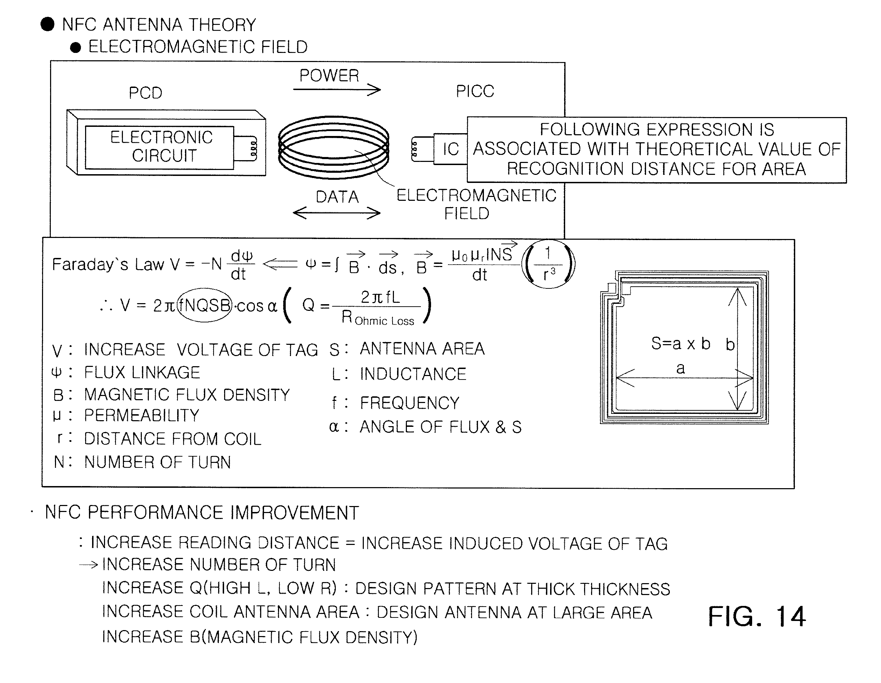

FIG. 14 is a view illustrating NFC communications theory of the NFC communications unit, according to an embodiment.

Briefly describing the NFC communications with reference to FIG. 14, when a proximity coupling device (PDC) provides power to a proximity integrated circuit card (PICC) through a proximity electromagnetic field, the PCD and the PICC transmit and receive data using NFC communications.

Here, the PCD is a portable terminal (for example, a smart phone) in which an NFC reader capable of obtaining data (for example, an identification (ID)) from the NFC communications unit is mounted, and the PICC is an electronic shelf label in which the NFC communications unit providing data such as an identification (ID) (for example, an MAC address), or the like, is mounted.

Here, an induced voltage V indicating a recognition distance between the PCD and the PICC is represented by the following Mathematical Expression 1 depending on Faraday's law.

Mathematical Expression 1

$$V = 2\pi j NQSB\cos\alpha, \textbf{ where } Q = \frac{2\pi fL}{Rohmic\text{-}loss}$$

It may be appreciated from Mathematical Expression 1 that the induced voltage V indicating NFC performance is determined by the number of turns (N) of NFC antenna patterns, a thickness (Q) of the NFC antenna pattern, an area (S) of the NFC antenna, and a magnetic flux density (B). In Mathematical Expression 1, $\alpha$ is an angle of flux. In addition, it is appreciated that the thickness (Q) of the NFC antenna pattern is in proportion to an NFC frequency and an inductance of the NFC antenna and is in inverse proportion to an ohmic loss resistance (Rohmic loss) of the NFC antenna.

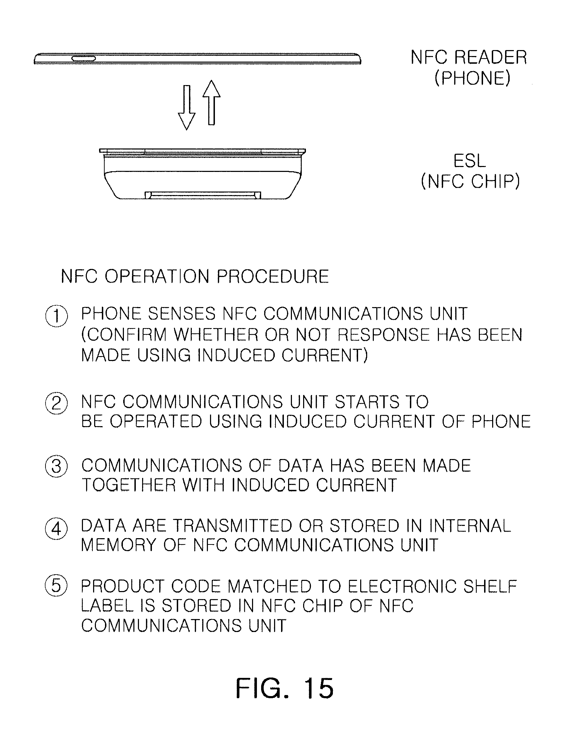

FIG. 15 is a view illustrating an operation of the NFC communications unit, according to an embodiment.

Describing a simple operation in the case in which an NFC reader is mounted in a phone and an NFC communications unit is mounted in an electronic shelf label will be described with reference to FIG. 15. Initially, the phone senses the NFC communications unit (confirm whether or not a response has been made using the induced current), thereafter, the NFC communications unit starts to operate an NFC chip using the induced current of the phone, communications of data is made together with the induced current, the data is transmitted or stored in an internal memory unit of the NFC communications unit, and the MAC ID of the electronic shelf label or a product code matched to the electronic shelf label is stored in the memory unit of the NFC chip.

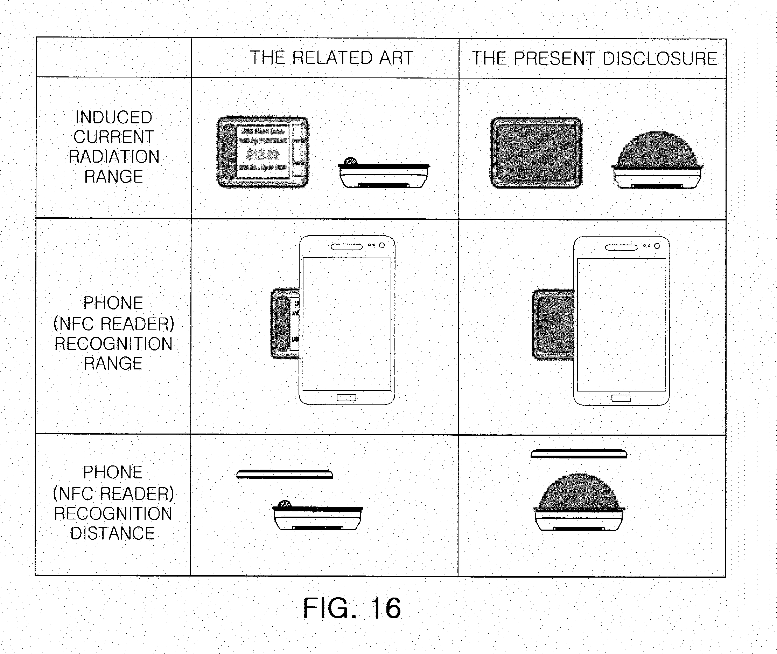

FIG. 16 is a view illustrating recognition ranges and recognition distances of NFC modules. FIG. 16 is a view for comparison and description between related art and the present disclosure.

It may be appreciated from FIG. 16 that an induced current radiation range according to related art is limited to a narrow area in which the NFC antenna is mounted, while an induced current radiation range according to an embodiment is extended to a wide region corresponding to an entire area of the electronic shelf label in which the NFC antenna is mounted.

Therefore, it is appreciated that a recognition range and a recognition distance with the NFC module of the electronic shelf label through the phone in which the NFC reader is mounted is relatively wider and longer than a recognition range and a recognition distance in related art. However, as previously noted the NFC reader can be mounted on any type of electronic device and is thus not limited to a phone. For example, the electronic device may include a tablet computer, a PMP and a smartwatch.

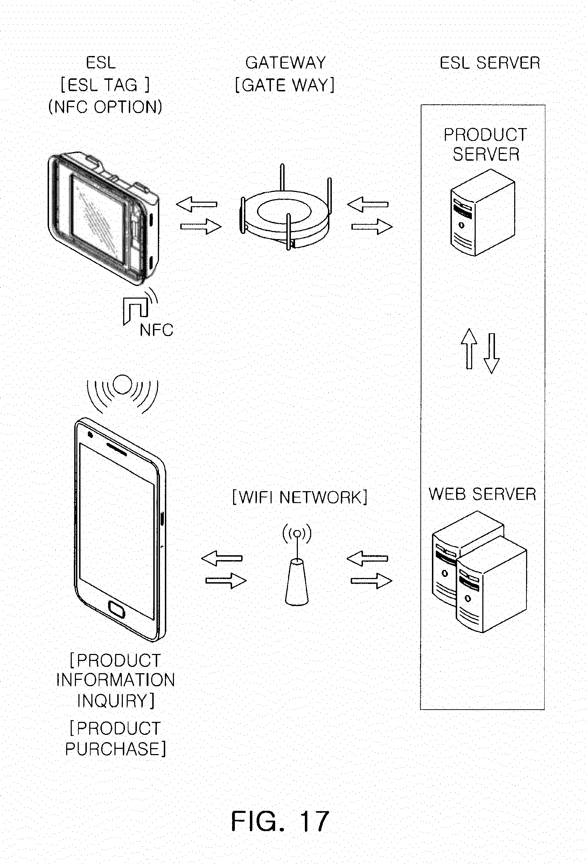

FIG. 17 is a view illustrating a use example of an NFC function in the electronic shelf label, according to an embodiment.

Referring to FIG. 17, illustrated is an example of a product information inquiry or request and a product information purchase performed between an electronic device, such as a phone and an electronic shelf label system. For example, in this case, the electronic shelf label system includes the electronic shelf label (ESL) in which the NFC module is mounted, a gateway, and a product server. When NFC communications are established between the phone and the electronic shelf label, through a WiFi network, and a web server, product information is queried, and the product is purchased.

As described above, according to an embodiment, when using the electronic shelf label in which the NFC communications unit is mounted, product information is requested, and the product is easily reserved and purchased.

As set forth above, according to embodiments, in the case of using the electronic shelf label that is applied to the electronic shelf label system, the product information is provided using NFC communications.

Particularly, the NFC function is embedded in the electronic shelf label to form the pattern of the NFC antenna in a relative wide area (as compared with a partial area) corresponding to the entire internal area of the electronic shelf label, whereby a sufficient size of the NFC antenna is secured. In addition, the NFC antenna is mounted so as to occupy most of the internal area of the electronic shelf label, such that the NFC recognition distance and recognition range is increased as relatively widely possible in a define size of the electronic shelf label.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

**Claims**

1. An electronic shelf label comprising:

   a front protection plate;
   a rear case coupled to the front protection plate;
   a display panel disposed on an inner side of the front protection plate and comprising a display unit and a driving unit configured to drive the display unit;
   a main circuit board disposed on an inner side of the rear case and comprising a main circuit unit electrically connected to the driving unit; and
   a near field communications (NFC) unit disposed between the display panel and the main circuit board and configured to perform NFC communications.

2. The electronic shelf label of claim 1, wherein the main circuit unit is disposed on a rear surface of the main circuit board facing the rear case and is configured to control the driving unit to display product information on the display unit.

3. The electronic shelf label of claim 1, wherein the NFC unit comprises:

   an NFC antenna for NFC communications; and
   an NFC chip electrically connected to the NFC antenna and configured to perform NFC communications.

4. An electronic shelf label comprising:

   a front protection plate;
   a rear case coupled to the front protection plate;
   a display panel disposed on an inner side of the front protection plate and comprising a display unit and a driving unit configured to drive the display unit;

a main circuit board disposed on an inner side of the rear case and comprising a main circuit unit electrically connected to the driving unit; and

a near field communications (NFC) unit formed on a substrate disposed between the display panel and the main circuit board and configured to perform NFC communications.

**5.** The electronic shelf label of claim 4, wherein the main circuit unit is disposed on a rear surface of the main circuit board facing the rear case and is configured to control the driving unit to display product information on the display unit.

**6.** The electronic shelf label of claim 4, wherein the NFC unit comprises:

an NFC antenna formed on a front surface of the substrate facing the display panel and provided for NFC communications; and

an NFC chip disposed on the front surface of the substrate, electrically connected to the NFC antenna, and configured to perform NFC communications.

**7.** The electronic shelf label of claim 4, wherein the main circuit board further comprises a connector electrically connecting the main circuit unit and the driving unit of the display panel to each other.

**8.** The electronic shelf label of claim 4, wherein the NFC unit comprises:

a first adhering layer adhering the main circuit unit and the substrate to each other; and

a second adhering layer adhering the display panel and the substrate to each other.

**9.** The electronic shelf label of claim 4, wherein the NFC unit comprises a ferromagnetic substance sheet disposed between the main circuit board and the substrate.

**10.** The electronic shelf label of claim 4, wherein the NFC unit comprises:

a ferromagnetic substance sheet disposed between the main circuit board and the substrate; and

a protecting layer disposed between the display panel and the substrate.

**11.** An electronic shelf label comprising:

a front protection plate;

a rear case coupled to the front protection plate;

a display panel disposed on an inner side of the front protection plate and comprising a display unit and a driving unit configured to drive the display unit;

a main circuit board disposed on an inner side of the rear case and comprising a main circuit unit electrically connected to the driving unit; and

a near field communications (NFC) unit comprising an NFC antenna formed on a substrate disposed between the display panel and the main circuit board and an NFC chip disposed on the main circuit board and electrically connected to the NFC antenna configured to perform NFC communications.

**12.** The electronic shelf label of claim 11, wherein the main circuit unit is disposed on a rear surface of the main circuit board facing the rear case and is configured to control the driving unit to display product information on the display unit.

**13.** The electronic shelf label of claim 11, wherein the NFC chip is disposed on one of a rear surface of the main circuit board, a front surface of the main circuit board and the main circuit board.

**14.** The electronic shelf label of claim 11, wherein the main circuit board further comprises a connector electrically connecting the main circuit unit and the driving unit of the display panel to each other.

**15.** An electronic shelf label comprising:

a front protection plate;

a rear case coupled to the front protection plate;

a display panel disposed on an inner side of the front protection plate and comprising a display unit and a driving unit configured to drive the display unit;

a main circuit board disposed on an inner side of the rear case and comprising a main circuit unit disposed on a rear surface of the main circuit board facing the rear case and electrically connected to the driving unit; and a near field communications (NFC) unit comprising an NFC antenna disposed on a front surface of the NFC communications module facing the display panel and an NFC chip disposed on the main circuit board and electrically connected to the NFC antenna configured to perform NFC communications.

FIG. 1

FRONT SIDE

REAR SIDE

USB Flash Drive
m30 by PLEOMAX
$12.99
USB 2.0 , Up to 16GB

EP 2 937 821 A1

FIG. 2

EP 2 937 821 A1

FIG. 3A

FIG. 3B

FIG. 4A

FIG. 4B

FIG. 5

FIG. 6

<u>310</u>

311

301

ELECTRICAL CONNECTION

312

F    200

FIG. 7

EP 2 937 821 A1

FIG. 8

310

250 F 310 312 150 100

200

FIG. 9A

250 150 100

200

150 100 200

250

F

FIG. 9B

FIG. 10A

FIG. 10B

FIG. 11A

FIG. 11B

FIG. 11C

FIG. 11D

FIG. 11E

200

100

ANT

210

MAIN
CIRCUIT
UNIT

120

DRIVING
UNIT

110

DISPLAY
UNIT

## FIG. 12

310    312

DIGITAL CONTROL UNIT

antenna

RF INTERFACE

ANTICOLLISION

EEPROM
INTERFACE

EEPROM
or
MEMORY

311

FIELD
DETECTION

COMMAND
INTERPRETER

## FIG. 13

- ● NFC ANTENNA THEORY
  - ● ELECTROMAGNETIC FIELD

POWER →

PCD

PICC

ELECTRONIC CIRCUIT

IC

FOLLOWING EXPRESSION IS ASSOCIATED WITH THEORETICAL VALUE OF RECOGNITION DISTANCE FOR AREA

DATA ←→

ELECTROMAGNETIC FIELD

Faraday`s Law $V = -N \dfrac{d\psi}{dt} \Longleftarrow \psi = \int \vec{B} \cdot \vec{ds}, \quad \vec{B} = \dfrac{\mu_0 \mu_r I N \vec{S}}{dt} \left(\dfrac{1}{r^3}\right)$

$\therefore V = 2\pi (fNQSB) \cdot \cos\alpha \left( Q = \dfrac{2\pi fL}{R_{Ohmic\ Loss}} \right)$

V : INCREASE VOLTAGE OF TAG

ψ : FLUX LINKAGE

B : MAGNETIC FLUX DENSITY

μ : PERMEABILITY

r : DISTANCE FROM COIL

N : NUMBER OF TURN

S : ANTENNA AREA

L : INDUCTANCE

f : FREQUENCY

α : ANGLE OF FLUX & S

$S = a \times b$

· NFC PERFORMANCE IMPROVEMENT

: INCREASE READING DISTANCE = INCREASE INDUCED VOLTAGE OF TAG

→ INCREASE NUMBER OF TURN

INCREASE Q(HIGH L, LOW R) : DESIGN PATTERN AT THICK THICKNESS

INCREASE COIL ANTENNA AREA : DESIGN ANTENNA AT LARGE AREA

INCREASE B(MAGNETIC FLUX DENSITY)

FIG. 14

EP 2 937 821 A1

NFC READER
(PHONE)

ESL
(NFC CHIP)

NFC OPERATION PROCEDURE

① PHONE SENSES NFC COMMUNICATIONS UNIT
(CONFIRM WHETHER OR NOT RESPONSE HAS BEEN
MADE USING INDUCED CURRENT)

② NFC COMMUNICATIONS UNIT STARTS TO
BE OPERATED USING INDUCED CURRENT OF PHONE

③ COMMUNICATIONS OF DATA HAS BEEN MADE
TOGETHER WITH INDUCED CURRENT

④ DATA ARE TRANSMITTED OR STORED IN INTERNAL
MEMORY OF NFC COMMUNICATIONS UNIT

⑤ PRODUCT CODE MATCHED TO ELECTRONIC SHELF
LABEL IS STORED IN NFC CHIP OF NFC
COMMUNICATIONS UNIT

# FIG. 15

|  | THE RELATED ART | THE PRESENT DISCLOSURE |
|---|---|---|
| INDUCED CURRENT RADIATION RANGE | | |
| PHONE (NFC READER) RECOGNITION RANGE | | |
| PHONE (NFC READER) RECOGNITION DISTANCE | | |

FIG. 16

EP 2 937 821 A1

ESL
[ESL TAG ]
(NFC OPTION)

GATEWAY
[GATE WAY]

ESL SERVER

PRODUCT
SERVER

NFC

[WIFI NETWORK]

WEB SERVER

[PRODUCT
INFORMATION
INQUIRY]

[PRODUCT
PURCHASE]

FIG. 17

Europäisches
Patentamt

European
Patent Office

Office européen
des brevets

# EUROPEAN SEARCH REPORT

Application Number

EP 15 16 2392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/007737 A1 (PRICER AB [SE]) 9 January 2014 (2014-01-09) * page 16, line 5 - line 8; figure 2 * ----- | 1-3,15 4-14 | INV. G06K19/077 G09F3/20 G06F3/147 |
| A | | | |
| X | GB 2 458 945 A (KENT ANDREW [GB]) 7 October 2009 (2009-10-07) * figure 1 * ----- | 15 | |

TECHNICAL FIELDS
SEARCHED        (IPC)

G06K
G09F
G06F

The present search report has been drawn up for all claims

| Place of search | Date of completion of the search | Examiner |
|---|---|---|
| The Hague | 3 September 2015 | de Ronde, Jan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                 
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 15 16 2392

This annex lists the patent family members relating to the patent documents cited in  the above-mentioned European search report.
The members are as contained in the European Patent Office EDP file on
The European Patent Office is in no way liable for these particulars which are merely given for the purpose of information.

03-09-2015

| Patent document cited in search report | Publication date | Patent family member(s) | Publication date |
|---|---|---|---|
| WO 2014007737    A1 | 09-01-2014 | EP      2870594 A1<br>US  2015170550 A1<br>WO  2014007737 A1 | 13-05-2015<br>18-06-2015<br>09-01-2014 |
| GB 2458945      A | 07-10-2009 | NONE | |

EPO FORM P0459

For more details about this annex : see Official Journal of the European Patent Office, No. 12/82

**EP 2 937 821 A1**

**Patent documents cited in the description**

- KR 1020140048350
- KR 1020140098383
- KR 1020140131723